# EUROPÄISCHE PATENTSCHRIFT

(11) **EP 3 403 784 B1**
(45) Veröffentlichungstag und Bekanntmachung des Hinweises auf die Patenterteilung: **04.12.2019**
(21) Anmeldenummer: 18172532.6
(22) Anmeldetag: 16.05.2018
(51) Int. Cl.: B27C 5/10, B23B 31/00, B23B 31/117

(54) **BEARBEITUNGSMASCHINE**
MACHINING UNIT
MACHINE D'USINAGE

(30) Priorität: 19.05.2017 DE 102017110916; 28.11.2017 DE 102017128170
(43) Veröffentlichungstag der Anmeldung: 21.11.2018
(73) Patentinhaber: Mafell AG, 78727 Oberndorf a.N. (DE)
(72) Erfinder: Faißt, Rainer, 72175 Dornhan-Weiden (DE); Hofmeister, David, 78662 Bösingen (DE)
(74) Vertreter: Manitz Finsterwald Patent- und Rechtsanwaltspartnerschaft mbB

(56) Entgegenhaltungen:
- EP-A1- 2 382 929
- WO-A1-2007/093857
- GB-A- 900 065

## Beschreibung

Die vorliegende Erfindung betrifft eine Bearbeitungsmaschine, insbesondere eine Oberfräse gemäß dem Oberbegriff des Anspruches 1. Eine solche Bearbeitungsmaschine ist aus dem Dokument WO2007/093857A1 bekannt.

Solche Bearbeitungsmaschinen werden mit verschiedenen Werkzeugen verwendet, beispielsweise mit unterschiedlich dimensionierten Fräsern oder Bohrern, die mittels der Spanneinrichtung ausgewechselt werden können. Bei der Spanneinrichtung kann es sich um eine Spannzange handeln, die mittels eines Handwerkzeugs wie zum Beispiel eines Gabelschlüssels geöffnet und geschlossen wird. Die Handhabung eines separaten Handwerkzeugs ist zeitraubend und lästig. Insbesondere bei einer Oberfräse, welche einen über Führungssäulen mit dem Gehäuse verbundenen Frästisch aufweist, ist die Drehbetätigung einer Spannzange umständlich, weil das Handwerkzeug an den Führungssäulen anschlägt und daher wiederholt umgesetzt werden muss. Zudem kann das Handwerkzeug leicht verlegt werden. Eine grundsätzliche Herausforderung bei Spanneinrichtungen von Bearbeitungsmaschinen ist die Gewährleistung einer angemessenen Rundlaufgenauigkeit und eines ausreichend festen Kraftschlusses.

Die WO 2007/093857 A1 offenbart eine Spiralsäge, bei der die Kraftübertragung von der Motorwelle auf die Werkzeugaufnahme über ein Kegelradgetriebe erfolgt. Eine geschlitzte Buchse mit kegelförmigem Längsschnitt dient der Aufnahme des Werkzeugschafts. Ferner ist eine äußere Hülse mit korrespondierenden Schrägflächen vorgesehen. Mittels eines Hebels kann die Buchse gegenüber der Hülse axial verschoben werden, wobei sich je nach Schieberichtung eine Aufweitung oder eine Verengung der Buchsendurchführung ergibt.

In der GB 900 065 ist eine Spannvorrichtung für Werkzeuge offenbart, die eine gestapelte Anordnung von Klemmscheiben umfasst. Während des Betriebs drückt eine Nuss, in welche das Werkzeugende eingeschraubt ist, über eine Hülse in axialer Richtung auf den Scheibenstapel und sorgt so für einen Halt des Werkzeugschafts.

Es ist eine Aufgabe der Erfindung, das Einspannen von Werkzeugen an Bearbeitungsmaschinen zu vereinfachen, ohne die Verbindungsfestigkeit und die Rundlaufgenauigkeit des eingespannten Werkzeugs zu beeinträchtigen.

Die Lösung der Aufgabe erfolgt durch eine Bearbeitungsmaschine mit den Merkmalen des Anspruchs 1.

Erfindungsgemäß umfasst die Spanneinrichtung wenigstens ein an der Werkzeugaufnahme gehaltenes Klemmorgan, das eine zentrale Durchführung zum Durchführen eines in die Werkzeugaufnahme einzuführenden Werkzeugs aufweist, wobei das Klemmorgan durch axiale Beaufschlagung verformbar und durch dieses Verformen die Weite der Durchführung veränderbar ist, und ein an der Werkzeugaufnahme gelagertes Spannelement, das in axialer Richtung zwischen einer Spannstellung und einer Lösestellung verschiebbar ist, wobei durch ein Verschieben des Spannelements in Richtung der Spannstellung das Klemmorgan axial beaufschlagbar ist.

Das Festklemmen des Werkzeugs in der Werkzeugaufnahme erfolgt also durch eine Verengung der Durchführung infolge einer Verformung des Klemmorgans. Diese Verformung kann in einfacher und schneller Weise dadurch herbeigeführt werden, dass das Spannelement relativ zur Werkzeugaufnahme verschoben und das Klemmorgan dadurch axial beaufschlagt wird - entweder von dem Spannelement selbst oder von einem mit diesem in mechanischer Verbindung stehenden Übertragungselement. Es hat sich herausgestellt, dass hierbei ein vergleichsweise geringer axialer Hub des Spannelements ausreicht, um eine hohe Reibmoment-übertragung von der Werkzeugaufnahme auf das Werkzeug zu ermöglichen. Eine erfindungsgemäße Spanneinrichtung ist daher besonders leicht und schnell betätigbar. Insbesondere ist der Einsatz eines Werkzeugs nicht zwingend erforderlich, das heißt es ist ein werkzeugloses Spannen möglich.

Ein weiterer Vorteil der Erfindung besteht darin, dass die Werkzeugaufnahme von der Drehstellung des Werkzeugs unabhängig ist. Das Werkzeug braucht folglich zum Einspannen nicht ausgerichtet zu werden. Auch ist es nicht erforderlich, das Werkzeug vor dem Einspannvorgang zu arretieren, d.h. gegen ein Verdrehen zu sichern, wie es z.B. im Stand der Technik bei Verwendung eines Gabelschlüssels notwendig ist.

Im Zusammenhang mit der vorliegenden Offenbarung sind die Begriffe "axial" und "radial" auf die Rotationsachse der drehend antreibbaren Welle bezogen zu verstehen.

Vorzugsweise ist die Spanneinrichtung ausschließlich kraftschlüssig wirksam, so dass das Einspannen in jeder Drehstellung der Werkzeugaufnahme und des Werkzeugs erfolgen kann. Demgegenüber ist bei einer formschlüssigen Werkzeugbefestigung eine Ausrichtung des Werkzeugs relativ zur Werkzeugaufnahme erforderlich.

Erfindungsgemäß weist das Klemmorgan einen die zentrale Durchführung umgebenden kegelförmigen Ring auf. Durch einen solchen Ring kann ein besonders gleichmäßiger radialer Druck auf einen einzuspannenden Werkzeugschaft ausgeübt werden, wodurch sich eine hohe Rundlaufgenauigkeit ergibt.

Erfindungsgemäß weist der Ring einen äußeren Randbereich und einen inneren Randbereich auf, wobei durch Verschieben des Spannelements in Richtung der Spannstellung einer der Randbereiche des Klemmorgans unter Abstützung des anderen Randbereichs axial beaufschlagbar ist, um das Klemmorgan abzuflachen. Bei einer Abflachung verengt sich die zentrale Aussparung des Rings und legt sich an einen durch diese hindurchgeführten Werkzeugschaft an, wodurch dieser zuverlässig gehalten wird.

Das Klemmorgan kann wenigstens eine flachkegelige Klemmscheibe umfassen, insbesondere wenigstens eine Sternscheibe. Flachkegelige Klemmscheiben ermöglichen die Ausübung einer radialen Klemmkraft bei Beaufschlagung durch eine axiale Stellkraft. Um eine ausreichende Verformbarkeit zu gewährleisten, sind Sternscheiben mit entlang des Umfangs verteilt angeordneten Aussparungen versehen. Insbesondere kann eine Sternscheibe durch einen mäanderförmigen Steg gebildet sein.

Eine Ausführungsform der Erfindung sieht vor, dass die Spanneinrichtung wenigstens ein Klemmscheibenpaket aus mehreren gestapelt angeordneten Klemmscheiben umfasst, die bei einer Beaufschlagung durch das Spannelement gemeinsam abgeflacht werden. Mittels eines solchen Klemmscheibenstapels kann eine erhöhte Klemmkraft ausgeübt werden. Zudem ist die Klemmkraft in einem ausgedehnten Bereich wirksam.

Eine spezielle Ausgestaltung der Erfindung sieht vor, dass die Spanneinrichtung zwei oder mehr separate Klemmscheibenpakete aus jeweils mehreren gestapelt angeordneten Klemmscheiben umfasst, wobei jeweils zwischen unmittelbar aufeinanderfolgenden Klemmscheibenpaketen ein Abstandhalter angeordnet ist. Die Fixierung des Werkzeugs durch Einklemmen findet bei dieser Ausgestaltung an wenigstens zwei voneinander beabstandeten Klemmstellen statt, was einen besonders sicheren Halt sowie eine hohe Rundlaufgenauigkeit gewährleistet.

Es kann vorgesehen sein, dass der Abstandhalter eine Anordnung aus zwei oder mehr koaxialen, axial gegeneinander verschiebbaren Distanzhülsen umfasst, wobei eine innere Distanzhülse den inneren Randbereichen der an ihr anliegenden Klemmscheiben und eine äußere Distanzhülse den äußeren Randbereichen der an ihr anliegenden Klemmscheiben zugeordnet ist. Die Klemmscheibenpakete sind bei dieser Ausgestaltung sowohl innen wie außen gegeneinander abgestützt, und zwar auch bei einer Abflachung der Klemmscheiben.

Gemäß einer weiteren Ausführungsform der Erfindung ist ein an der Werkzeugaufnahme ausgebildetes Widerlager für das Klemmorgan in axialer Richtung mit durch das Verschieben des Spannelementes in entgegengesetztem Sinn veränderlichen Abständen zwischen zwei Widerlagern des Spannelements angeordnet. Dadurch ergibt sich auf einer Seite des für das Klemmorgan vorgesehenen Widerlagers ein axialer Bewegungsspielraum für das Klemmorgan und auf der anderen Seite des für das Klemmorgan vorgesehenen Widerlagers ein zusätzlicher axialer Bewegungsspielraum, der beispielsweise für eine Vorspanneinrichtung genutzt werden kann. Bei einem Verschieben des Spannelements vergrößert sich der Abstand zwischen dem für das Klemmorgan vorgesehenen Widerlager und einem der Widerlager des Spannelements, während sich der Abstand zwischen dem für das Klemmorgan vorgesehenen Widerlager und dem anderen Widerlager des Spannelements um den gleichen Betrag verringert. Beispielsweise kann sich bei dieser Ausgestaltung eine Feder entspannen und dadurch das Klemmorgan axial komprimieren, während umgekehrt beim axialen Ausdehnen des Klemmorgans die Feder gespannt wird.

Es kann vorgesehen sein, dass das Klemmorgan in einer radial nach außen weisenden Richtung an dem Spannelement oder einem sich axial mit diesem mitbewegenden Element abstützbar ist. Bei einer solchen Ausgestaltung ist eine axiale Verschiebung des Spannelements nicht mit einer Relativbewegung zwischen der radialen Außenfläche des Klemmorgans und dem zur radialen Abstützung vorgesehenen Bauteil verbunden. Ein verschleißträchtiges Entlanggleiten oder Entlangkratzen des Klemmorgans an einem axial feststehenden Bauteil wird auf diese Weise vermieden.

Wenn die Spanneinrichtung mehrere axial beabstandete Klemmscheibenpakete umfasst, dann kann vorgesehen sein, dass die Klemmscheibenpakete gemeinsam axial bewegbar sind. Dabei sind bevorzugt die Klemmscheibenpakete in einer radial nach außen weisenden Richtung alle an dem gleichen Bauteil, insbesondere an dem Spannelement, oder an unterschiedlichen, sich gemeinsam axial bewegenden Bauteilen, bevorzugt an dem Spannelement und an zumindest einem sich axial mit diesem mitbewegenden Element, abstützbar. Axiale Relativbewegungen der Klemmscheibenpakete und somit Relativbewegungen bei einem der Klemmscheibenpakete zwischen dessen radialer Außenfläche und dem zur radialen Abstützung vorgesehenen Bauteil werden hierdurch vermieden.

Das Spannelement kann eine die Werkzeugaufnahme zumindest zur radialen und/oder axialen Abstützung des Klemmorgans umgreifende Hülse umfassen. Dies ermöglicht eine besonders einfache Konstruktion. Die Hülse kann auch einen Abschnitt aufweisen, welcher ein Widerlager für eine Vorspanneinrichtung bildet.

Vorzugsweise ist das Spannelement unverdrehbar an der Werkzeugaufnahme gelagert. Das heißt es ist insbesondere bevorzugt, dass zwischen der Werkzeugaufnahme und dem Spannelement eine Drehmitnahme vorgesehen ist, eine axiale Bewegung des Spannelements relativ zur Werkzeugaufnahme hingegen ermöglicht ist. Das Spannelement kann dann zur Drehmomentübertragung mitgenutzt werden.

Insbesondere kann das Spannelement für eine axial verschiebbare und unverdrehbare Lagerung über wenigstens eine formschlüssige Mitnehmer-Einrichtung wie z. B. ein Polygon-Profil, eine Keilwellen-Anordnung oder eine Passfeder-Anordnung mit der Werkzeugaufnahme gekoppelt sein. Dies ermöglicht eine besonders zuverlässige Drehmitnahme.

Die Werkzeugaufnahme kann sich zum freien Ende hin zu einer Aufnahme radial erweitern, in welche das Klemmorgan eingesetzt ist. Dadurch ist ein besonders kompakter Aufbau gewährleistet. Die Aufnahme kann beispielsweise hülsenartig sein, wobei eine im Hülsenboden vorgesehene Vertiefung zur Aufnahme eines Endabschnitts des Werkzeugs dient. Das Spannelement kann einen die Aufnahme umgreifenden Hülsenabschnitt bilden.

Vorzugsweise ist das Klemmorgan jedoch in eine durch das Spannelement gebildete Aufnahme eingesetzt. Bei dieser Ausgestaltung kommt es nämlich nicht zu einer verschleißträchtigen axialen Relativbewegung zwischen der radialen Außenfläche des Klemmorgans und der Wand der zugehörigen Aufnahme, weil sich beide Abschnitte synchron bewegen.

Das Spannelement kann in die Spannstellung oder in die Lösestellung vorgespannt sein. Vom Benutzer ist dann entweder nur beim Einspannen oder nur beim Lösen eines Werkzeugs Kraft aufzuwenden. Vorzugsweise ist das Spannelement in die Spannstellung vorgespannt, sodass zum Lösen ein aktiver Kraftaufwand erforderlich ist.

Eine Vorspanneinrichtung für das Spannelement kann eine Federeinrichtung umfassen, die bevorzugt wenigstens eine Tellerfeder, vorzugsweise ein Tellerfederpaket aus mehreren gestapelt angeordneten Tellerfedern, umfasst. Tellerfedern weisen eine besonders große Federhärte auf, das heißt eine relativ geringe axiale Auslenkung ist mit einer großen Kraft verbunden. Dies kommt einem kompakten Aufbau der Spanneinrichtung und einem geringen axialen Hub des Spannelements entgegen.

Die Tellerfeder kann sich direkt an der Werkzeugaufnahme und/oder direkt an dem Spannelement abstützen, z. B. an einem Widerlager des Spannelements und/oder an einem Widerlager der Werkzeugaufnahme. Die Werkzeugaufnahme und/oder das Spannelement können zu diesem Zweck mit geeigneten Ansätzen oder Flanschen versehen sein.

Die Spanneinrichtung kann einen schwenkbaren Betätigungshebel aufweisen, mittels dem das Spannelement zwischen der Spannstellung und der Lösestellung verstellbar ist. Dies ermöglicht eine einfache werkzeuglose Bedienung der Spanneinrichtung.

Bevorzugt ist der Betätigungshebel unverlierbar an einem Gehäuse der Bearbeitungsmaschine gelagert, sodass die Spanneinrichtung jederzeit betätigbar ist.

Der Betätigungshebel kann um eine quer zur Rotationsachse verlaufende Schwenkachse schwenkbar sein. Bei einer auf eine Werkstückoberfläche aufgesetzten Oberfräse ist ein solcher Betätigungshebel auf und ab zu schwenken, was für den Benutzer bequem ist.

Der Betätigungshebel kann sich zumindest im Wesentlichen parallel zur Rotationsachse erstrecken, wenn das Spannelement in die Spannstellung gestellt ist, und/oder sich senkrecht oder schräg zur Rotationsachse erstrecken, wenn das Spannelement in die Lösestellung gestellt ist. Bei einem Arbeiten mit eingespanntem Werkzeug steht der Betätigungshebel somit nicht vom Gehäuse der Bearbeitungsmaschine ab, sondern schmiegt sich gewissermaßen an dieses an.

Gemäß einer weiteren Ausgestaltung der Erfindung ist eine Umsetzeinrichtung zum Umsetzen einer Schwenkbewegung des Betätigungshebels in eine Verschiebebewegung des Spannelements vorgesehen. Für den Benutzer ist das Schwenken eines Hebels nämlich einfacher und bequemer als zum Beispiel das axiale Verschieben eines Stellelements.

Die Umsetzeinrichtung kann eine durch den Betätigungshebel drehbare Exzenterwelle zur direkten oder indirekten Beaufschlagung des Spannelements umfassen. Der Betätigungshebel kann hierbei in einfacher Weise direkt an der Exzenterwelle angreifen.

Eine spezielle Ausgestaltung der Erfindung sieht vor, dass die Exzenterwelle in zwei Einzelwellen geteilt ist, zwischen denen ein Freiraum besteht. Durch den Freiraum kann die Welle oder die Werkzeugaufnahme hindurchgeführt werden. Die Beaufschlagung des Spannelements auf beiden Seiten der Welle oder der Werkzeugaufnahme ist hinsichtlich der Kraftübertragung günstig.

Die Einzelwellen können mit jeweiligen Hebelschenkeln gekoppelt sein, die gemeinsam mit einem die Hebelschenkel verbindenden Griff den Betätigungshebel bilden und bevorzugt parallel zueinander verlaufen. Der Benutzer kann zur Betätigung der Spanneinrichtung den Griff ergreifen und an diesem den Betätigungshebel herabschwenken.

Gemäß einer weiteren Ausführungsform der Erfindung umfasst die Umsetzeinrichtung zur Beaufschlagung des Spannelementes einen radial verschiebbaren Spannkeil, der durch einen Exzenterabschnitt des Betätigungshebels beaufschlagbar ist. Der Spannkeil kann in einem Führungsabschnitt der Werkzeugaufnahme gleitend geführt sein und mit einem Abschnitt des Spannelements zusammenwirken. Die Schrägfläche des Spannkeils kann derart gestaltet sein, dass eine Selbsthemmung vorliegt. Die Beaufschlagung des Spannkeils kann über einen Druckstift erfolgen.

Eine erfindungsgemäße Bearbeitungsmaschine kann als handgeführte Oberfräse ausgeführt sein, die eine Maschineneinheit und einen Frästisch umfasst, wobei der Frästisch über wenigstens eine Führungssäule mit der Maschineneinheit verbunden ist. Dadurch dass die Betätigung der Spanneinrichtung über eine axiale Verschiebung des Spannelements und nicht etwa durch dessen Drehen um mehrere volle Umdrehungen wie bei einer Spannzange erfolgt, kommt es nicht zu einem unerwünschten Anschlagen eines Handwerkzeugs an der Führungssäule. Bevorzugt ist eine erfindungsgemäße Bearbeitungsmaschine elektrisch angetrieben.

Weiterbildungen sind auch den abhängigen Ansprüchen, der Beschreibung sowie den beigefügten Zeichnungen entnehmbar.

Nachfolgend wird die Erfindung beispielhaft unter Bezugnahme auf die Zeichnungen beschrieben.
- Fig. 1: ist eine vereinfachte perspektivische Ansicht einer erfindungsgemäßen Oberfräse.
- Fig. 2: zeigt eine Spanneinrichtung der Oberfräse gemäß Fig. 1 mit einem eingespannten Fräswerkzeug in einer seitlichen Schnittansicht.
- Fig. 3: zeigt eine Klemmscheibe der Spanneinrichtung gemäß Fig. 2 in einer Draufsicht.
- Fig. 4: zeigt einen Schnitt durch die Linie A-A in Fig. 2.
- Fig. 5: zeigt die in Fig. 2 gezeigte Spanneinrichtung der Oberfräse in einem entspannten Zustand ohne Fräswerkzeug.
- Fig. 6: zeigt die Oberfräse gemäß Fig. 1 mit einem für einen Werkzeugwechsel herabgeschwenkten Betätigungshebel.
- Fig. 7: zeigt eine alternativ gestaltete Spanneinrichtung einer erfindungsgemäßen Oberfräse mit einem eingespannten Fräswerkzeug in einer seitlichen Schnittansicht.
- Fig. 8: zeigt einen Schnitt durch die Linie A-A in Fig. 7.
- Fig. 9: zeigt die in Fig. 7 gezeigte Spanneinrichtung der Oberfräse in einem entspannten Zustand ohne Fräswerkzeug.

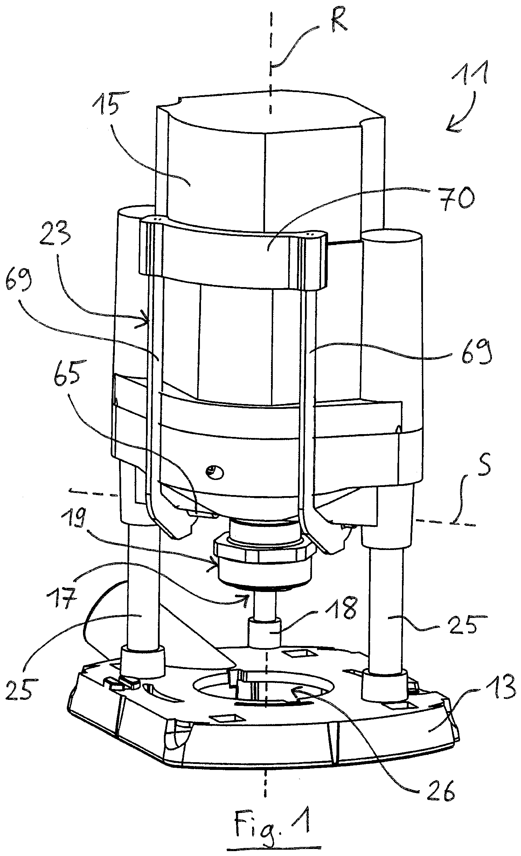

Die in Fig. 1 gezeigte Oberfräse 11 umfasst einen Frästisch 13 und eine Maschineneinheit 15. In der Maschineneinheit 15 ist ein nicht sichtbarer, vorzugsweise elektrischer Motor untergebracht, mittels welchem eine Werkzeugaufnahme 17 um eine Rotationsachse R rotierend antreibbar ist. Ein Fräswerkzeug 18 ist mittels einer nachfolgend noch genauer zu beschreibenden Spanneinrichtung 19 lösbar in der Werkzeugaufnahme 17 befestigt. Zur Betätigung der Spanneinrichtung 19 ist ein Betätigungshebel 23 vorgesehen.

Die Maschineneinheit 15 ist in grundsätzlich bekannter Weise über Führungssäulen 25 derart mit dem Frästisch 13 gekoppelt, dass eine geradlinige Eintauchbewegung der Maschineneinheit 15 gegenüber dem Frästisch 13 entlang der Rotationsachse R möglich ist. Um ein Eintauchen des Fräswerkzeugs 18 in ein Werkstück zu ermöglichen, ist in dem Frästisch 13 eine Ausnehmung 26 vorgesehen.

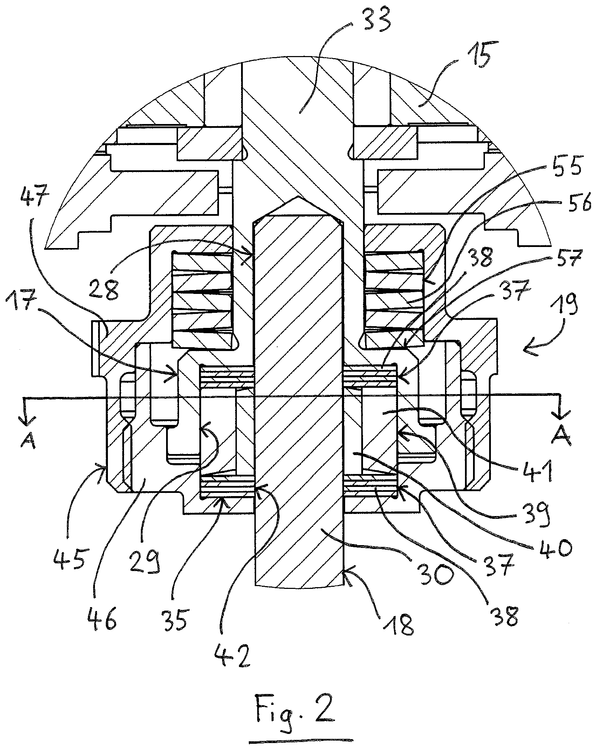

Wie in der vergrößerten Schnittdarstellung gemäß Fig. 2 zu erkennen ist, weist die Werkzeugaufnahme 17 einen ersten Aufnahmeabschnitt 28 und einen gegenüber dem ersten Aufnahmeabschnitt 28 radial erweiterten zweiten Aufnahmeabschnitt 29 auf. Die Weite des ersten Aufnahmeabschnitts 28 ist an den Durchmesser eines Schafts 30 des Fräswerkzeugs 18 angepasst. Bei dem dargestellten Ausführungsbeispiel ist die Werkzeugaufnahme 17 integral mit einer Motorwelle 33 ausgebildet.

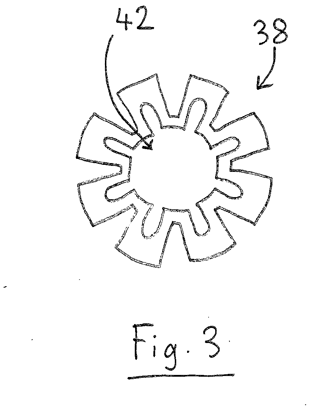

In den zweiten Aufnahmeabschnitt 29 der Werkzeugaufnahme 17 ist ein Klemmorgan 35 eingesetzt, welches in der Lage ist, den Schaft 30 des Fräswerkzeugs 18 kraftschlüssig in der Werkzeugaufnahme 17 zu fixieren. Das Klemmorgan 35 umfasst zwei Klemmscheibenpakete 37, die jeweils aus mehreren gestapelt angeordneten, ringförmigen Klemmscheiben 38 gebildet sind und durch einen Abstandhalter 39 in axialer Richtung voneinander getrennt sind. Vorzugsweise sind die Klemmscheiben 38 als Sternscheiben ausgebildet. Eine beispielhafte Klemmscheibe 38 ist in Fig. 3 in Draufsicht gezeigt.

Der Abstandhalter 39 umfasst eine innere Distanzhülse 40 und eine äußere Distanzhülse 41, die koaxial zueinander angeordnet sind und axial gegeneinander verschiebbar sind. Durch die ringförmigen Klemmscheiben 38 ist eine Durchführung 42 für den Schaft 30 gebildet.

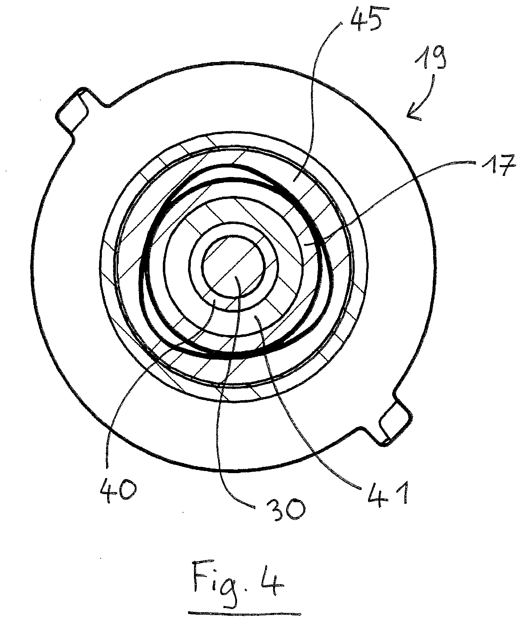

Die Werkzeugaufnahme 17 ist von einem Spannelement 45 umgriffen, das hier zwei gegensätzlich ausgerichtete und fest miteinander verbundene Hülsenelemente 46, 47 umfasst. Das Klemmorgan 35 ist in axialer Richtung einerseits am Boden des zweiten Aufnahmeabschnitts 29 und andererseits an einem unteren Innenwandabschnitt des Spannelements 45 abgestützt. Das Spannelement 45 ist axial verschiebbar, aber unverdrehbar an der Werkzeugaufnahme 17 gelagert. Um die entsprechende Drehmitnahme zu bewerkstelligen, ist das vordere Ende der Werkzeugaufnahme 17 mit einem Polygonwellen-Profil versehen, das mit einem Polygonnaben-Profil des Spannelements 45 zusammenwirkt, wie in Fig. 4 zu erkennen ist.

Auf axialer Höhe des ersten Aufnahmeabschnitts 28 befindet sich ein Tellerfederpaket 55 (Fig. 2) aus mehreren gestapelt angeordneten Tellerfedern 56, das in axialer Richtung einerseits an einem Ansatz 57 der Werkzeugaufnahme 17 und andererseits an einem oberen Innenwandabschnitt des Spannelements 45 abgestützt ist.

Durch das Tellerfederpaket 55 ist das Spannelement 45 axial in die in Fig. 2 gezeigte Spannstellung vorgespannt. Die durch das Tellerfederpaket 55 bereitgestellte Vorspannkraft kann mehr als 3 kN betragen. In der Spannstellung ist das Klemmorgan 35 axial durch das Spannelement 45 beaufschlagt, sodass die Klemmscheiben 38 der Klemmscheibenpakete 37 abgeflacht sind und radial gegen den Schaft 30 des Fräswerkzeugs 18 drücken, sodass dieses klemmend in der Werkzeugaufnahme 17 fixiert ist. Die Drehmomentübertragung erfolgt dabei einerseits von der Werkzeugaufnahme 17 über das im Bild obere Klemmscheibenpaket 37 auf den Schaft 30 und andererseits von der Werkzeugaufnahme 17 über das Spannelement 45 und das im Bild untere Klemmscheibenpaket 37 auf den Schaft 30.

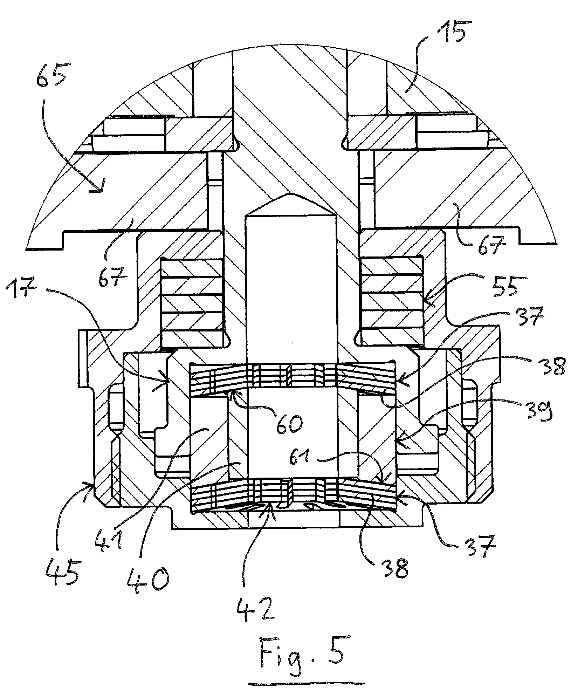

Zum Lösen des Fräswerkzeugs 18 von der Werkzeugaufnahme 17 wird das Spannelement 45 gegen die Vorspannkraft des Tellerfederpakets 55 axial in einer von der Maschineneinheit 15 weg weisenden Richtung verschoben, bis es die in Fig. 5 gezeigte Lösestellung erreicht hat. Das Tellerfederpaket 55 ist dann gespannt, wohingegen sich die Klemmscheibenpakete 37 entspannen und die Klemmscheiben 38 hierbei eine flachkegelige Grundform annehmen. Dies geht mit einer geringfügigen radialen Erweiterung der Durchführung 42 und mit einem Lösen der Klemmverbindung einher. Dadurch dass der Abstandhalter 39 zwei gegeneinander verschiebbare Distanzhülsen 40, 41 umfasst, sind die inneren Randbereiche 60 der Klemmscheibenpakete 37 und die äußeren Randbereiche 61 der Klemmscheibenpakete 37 jeweils voneinander unabhängig auf Abstand gehalten.

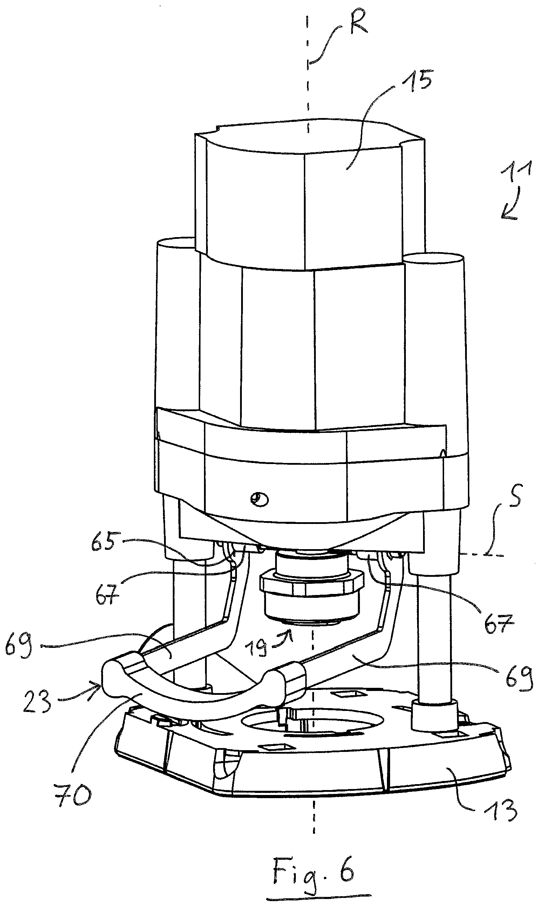

Das axiale Verschieben des Spannelements 45 von der Spannstellung in die Lösestellung wird mittels des in Fig. 1 gezeigten Betätigungshebels 23 bewerkstelligt. Dieser ist um eine quer zur Rotationsachse R verlaufende Schwenkachse S schwenkbar an der Maschineneinheit 15 gelagert und mit einer um die Schwenkachse S drehbaren Exzenterwelle 65 gekoppelt. Wie in Fig. 2 und 4 erkennbar ist die Exzenterwelle 65 in zwei Einzelwellen 67 geteilt, zwischen denen die Werkzeugaufnahme 17 durchgeführt ist. Wie aus Fig. 6 hervorgeht, sind die Einzelwellen 67 mit jeweiligen Hebelschenkeln 69 gekoppelt, die durch einen Griff 70 miteinander verbunden sind.

Wenn der Benutzer den Griff 70 ergreift und ausgehend von der in Fig. 1 dargestellten Stellung in die in Fig. 6 gezeigte Stellung verschwenkt, beaufschlagt die Exzenterwelle 65 die Oberseite des Spannelements 45 und drückt dieses axial von der Maschineneinheit 15 weg in die Lösestellung. Die Verklemmung wird daraufhin gelöst, sodass ein Werkzeugwechsel stattfinden kann. Die Beaufschlagung des Spannelements 45 durch die Exzenterwelle 65 könnte auch indirekt über ein oder mehrere Übertragungselemente erfolgen.

Dadurch dass sich der Betätigungshebel 23 im Wesentlichen parallel zur Rotationsachse R erstreckt, wenn das Spannelement 45 in die Spannstellung gestellt ist, ist die Handhabung der Oberfräse 11 mit eingespanntem Fräswerkzeug 18 durch den Betätigungshebel 23 praktisch nicht beeinträchtigt.

Es hat sich gezeigt, dass es mittels der Klemmscheiben 38 möglich ist, ein Drehmoment von 8 Nm und mehr zu übertragen, wobei der axiale Hub des Spannelements 45 außerordentlich gering ist. Beispielsweise kann der axiale Hub des Spannelements 45 zwischen der Spannstellung und der Lösestellung weniger als 1 mm betragen.

Bei dem hier vorgestellten Konzept kann folglich der Benutzer mittels des Betätigungshebels 23 gegen eine Vorspannkraft des Tellerfederpakets 55 von z.B. etwa 3,5kN ein auszuwechselndes Werkzeug 18 freigeben, wobei diese Vorspannkraft ausreicht, um die beiden jeweils mehrere Klemmscheiben 38 umfassenden Pakete 37 durch einen axialen Hub des Spannelementes 45 von etwa 1mm derart zusammenzudrücken, dass alle Klemmscheiben 38 gemeinsam ein Drehmoment von etwa 8Nm auf das hierdurch eingespannte Werkzeug 18 zu übertragen.

Das hier erwähnte Drehmoment von etwa 8Nm bezieht sich auf einen Schaftdurchmesser des Werkzeugs 18 von 8mm. Für größere oder kleinere Schaftdurchmesser können andere zu übertragende Drehmomente erforderlich sein. Die Anzahl, die Größe und/oder andere Eigenschaften der Klemmscheiben 38 kann bzw. können dann entsprechend variiert werden. Insbesondere kann vorgesehen sein, für unterschiedliche Schaftdurchmesser verschiedene Baueinheiten als auswechselbare Werkzeugaufnahmen oder auswechselbare Baugruppen der Werkzeugaufnahme vorzusehen, die in Abhängigkeit von dem jeweiligen Schaftdurchmesser des Werkzeugs eingebaut werden.

Eine nicht dargestellte Ausführungsform einer erfindungsgemäßen Oberfräse sieht eine Spanneinrichtung vor, bei welcher zur Umsetzung der Schwenkbewegung des Betätigungshebels in eine axiale Bewegung des Spannelements ein radial verschiebbarer Spannkeil vorgesehen ist, der durch einen Exzenterabschnitt des Betätigungshebels beaufschlagbar ist.

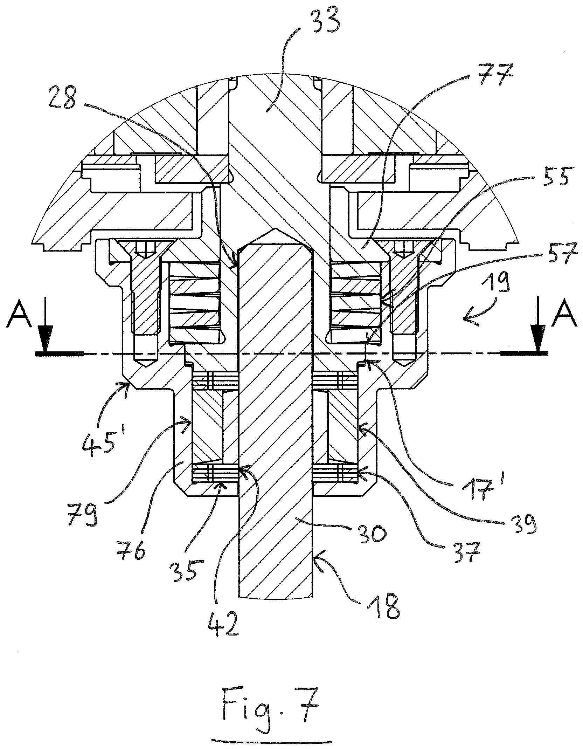

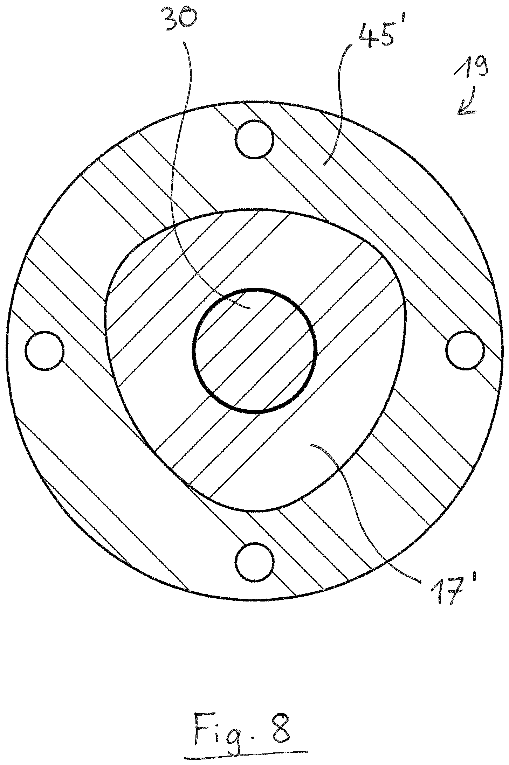

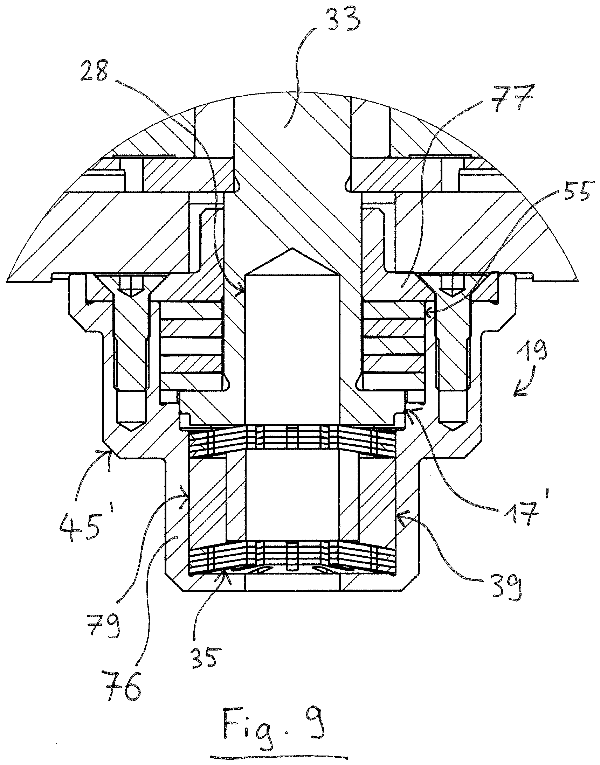

In den Fig. 7 bis 9 ist eine Spanneinrichtung 19 mit einem alternativ gestalteten Spannelement 45' gezeigt. Die Werkzeugaufnahme 17' weist hier lediglich einen Aufnahmeabschnitt 28 auf, in welchen der Schaft 30 des Fräswerkzeugs 18 einführbar ist. Das Klemmorgan 35 ist dagegen nicht in einen Aufnahmeabschnitt der Werkzeugaufnahme 17' eingesetzt, sondern in eine durch das Spannelement 45' gebildete Aufnahme 79. Das Spannelement 45' umfasst hier einen Hülsenabschnitt 76, welcher die Aufnahme 79 bildet, sowie einen fest mit diesem verbundenen Deckel 77. Das Klemmorgan 35 ist in radial nach außen weisender Richtung an der Innenwand des Hülsenabschnitts 76 abstützbar. Da sich der Hülsenabschnitt 76 axial mit dem eingesetzten Klemmorgan 35 mitbewegt, ist ein verschleißträchtiges Entlanggleiten oder Entlangkratzen der radialen Außenseite des Klemmorgans 35 an der Wand der Aufnahme 79 ausgeschlossen. Dies geht insbesondere aus einem Vergleich der Fig. 7 und 9 hervor. Das Spannelement 45' ist auch bei dieser Ausgestaltung mittels einer Anordnung aus Polygonwellen-Profil und Polygonnaben-Profil axial verschiebbar, aber unverdrehbar an der Werkzeugaufnahme 17' gelagert, wie in Fig. 8 zu erkennen ist.

Eine wie vorstehend beschriebene Spanneinrichtung 19 kann auch bei anderen Bearbeitungsmaschinen als Oberfräsen, zum Beispiel bei Bohrmaschinen oder Fräsmotoren, vorteilhaft sein.

### Bezugszeichenliste:

- 11: Oberfräse
- 13: Frästisch
- 15: Maschineneinheit
- 17, 17': Werkzeugaufnahme
- 18: Fräswerkzeug
- 19: Spanneinrichtung
- 23: Betätigungshebel
- 25: Führungssäule
- 26: Ausnehmung
- 28: erster Aufnahmeabschnitt
- 29: zweiter Aufnahmeabschnitt
- 30: Schaft
- 33: Motorwelle
- 35: Klemmorgan
- 37: Klemmscheibenpaket
- 38: Klemmscheibe
- 39: Abstandhalter
- 40: innere Distanzhülse
- 41: äußere Distanzhülse
- 42: Durchführung
- 45, 45': Spannelement
- 46, 47: Hülsenelement
- 55: Tellerfederpaket
- 56: Tellerfeder
- 57: Ansatz
- 60: innerer Randbereich
- 61: äußerer Randbereich
- 65: Exzenterwelle
- 67: Einzelwelle
- 69: Hebelschenkel
- 70: Griff
- 76: Hülsenabschnitt
- 77: Deckel
- 79: Aufnahme

- R: Rotationsachse
- S: Schwenkachse

## Patentansprüche

1. Bearbeitungsmaschine (11), insbesondere Oberfräse, mit
einer um eine Rotationsachse (R) drehend antreibbaren Welle (33), einer Werkzeugaufnahme (17, 17'), die mit der Welle (33) antriebswirksam gekoppelt oder einstückig mit dieser ausgebildet ist, und
einer Spanneinrichtung (19) zum lösbaren Befestigen eines Werkzeugs (18) in der Werkzeugaufnahme (17, 17'), wobei die Spanneinrichtung (19) umfasst:
wenigstens ein an der Werkzeugaufnahme (17, 17') gehaltenes Klemmorgan (35), das eine zentrale Durchführung (42) zum Durchführen eines in die Werkzeugaufnahme (17, 17') einzuführenden Werkzeugs (18) aufweist, wobei das Klemmorgan (35) durch axiale Beaufschlagung verformbar und durch dieses Verformen die Weite der Durchführung (42) veränderbar ist, und
ein an der Werkzeugaufnahme (17, 17') gelagertes Spannelement (45, 45'), das in axialer Richtung zwischen einer Spannstellung und einer Lösestellung verschiebbar ist, wobei durch ein Verschieben des Spannelements (45, 45') in Richtung der Spannstellung das Klemmorgan (35) axial beaufschlagbar ist,
**dadurch gekennzeichnet, dass**
das Klemmorgan (35) einen die zentrale Durchführung (42) umgebenden kegelförmigen Ring aufweist,
wobei der Ring einen äußeren Randbereich (61) und einen inneren Randbereich (60) aufweist, wobei durch Verschieben des Spannelements (45, 45') in Richtung der Spannstellung einer der Randbereiche (61) des Klemmorgans (35) unter Abstützung des anderen Randbereichs (60) axial beaufschlagbar ist, um das Klemmorgan (35) abzuflachen.

2. Bearbeitungsmaschine nach Anspruch 1,
**dadurch gekennzeichnet, dass**
das Klemmorgan (35) wenigstens eine flachkegelige Klemmscheibe (38) oder eine Sternscheibe umfasst.

3. Bearbeitungsmaschine nach zumindest einem der vorstehenden Ansprüche,
**dadurch gekennzeichnet, dass**
die Spanneinrichtung (19) wenigstens ein Klemmscheibenpaket (37) aus mehreren gestapelt angeordneten Klemmscheiben (38) umfasst, die bei einer Beaufschlagung durch das Spannelement (45, 45') gemeinsam abgeflacht werden.

4. Bearbeitungsmaschine nach zumindest einem der vorstehenden Ansprüche,
**dadurch gekennzeichnet, dass**
ein an der Werkzeugaufnahme (17, 17') ausgebildetes Widerlager für das Klemmorgan in axialer Richtung mit durch das Verschieben des Spannelementes (45, 45') in entgegengesetztem Sinn veränderlichen Abständen zwischen zwei Widerlagern des Spannelementes (45, 45') angeordnet ist, und/oder dass das Klemmorgan (35) in einer radial nach außen weisenden Richtung an dem Spannelement (45') oder einem sich axial mit diesem mitbewegenden Element abstützbar ist.

5. Bearbeitungsmaschine nach zumindest einem der vorstehenden Ansprüche,
**dadurch gekennzeichnet, dass**
das Spannelement (45, 45') eine die Werkzeugaufnahme (17, 17') zumindest zur radialen und/oder axialen Abstützung des Klemmorgans (35) umgreifende Hülse (46, 76) umfasst.

6. Bearbeitungsmaschine nach zumindest einem der vorstehenden Ansprüche,
**dadurch gekennzeichnet, dass**
das Spannelement (45, 45') unverdrehbar an der Werkzeugaufnahme (17) gelagert ist.

7. Bearbeitungsmaschine nach zumindest einem der vorstehenden Ansprüche,
**dadurch gekennzeichnet, dass**
das Klemmorgan (35) in eine durch das Spannelement (45') gebildete Aufnahme (79) eingesetzt ist.

8. Bearbeitungsmaschine nach einem der Ansprüche 1 bis 6,
**dadurch gekennzeichnet, dass**
die Werkzeugaufnahme (17) sich zum freien Ende hin zu einer Aufnahme (29) radial erweitert, in welche das Klemmorgan (35) eingesetzt ist.

9. Bearbeitungsmaschine nach zumindest einem der vorstehenden Ansprüche,
**dadurch gekennzeichnet, dass**
das Spannelement (45, 45') in die Spannstellung oder in die Lösestellung vorgespannt ist.

10. Bearbeitungsmaschine nach zumindest einem der vorstehenden Ansprüche,
**dadurch gekennzeichnet, dass**
die Spanneinrichtung (19) einen schwenkbaren Betätigungshebel (23) aufweist, mittels dem das Spannelement (45, 45') zwischen der Spannstellung und der Lösestellung verstellbar ist.

11. Bearbeitungsmaschine nach Anspruch 10,
**dadurch gekennzeichnet, dass**
der Betätigungshebel (23) um eine quer zur Rotationsachse (R) verlaufende Schwenkachse (S) schwenkbar ist,
und/oder dass der Betätigungshebel (23) sich zumindest im Wesentlichen parallel zur Rotationsachse (R) erstreckt, wenn das Spannelement (45, 45') in die Spannstellung gestellt ist, und/oder sich senkrecht oder schräg zur Rotationsachse (R) erstreckt, wenn das Spannelement (45, 45') in die Lösestellung gestellt ist.

12. Bearbeitungsmaschine nach Anspruch 10 oder 11,
**dadurch gekennzeichnet, dass**
eine Umsetzeinrichtung (65) zum Umsetzen einer Schwenkbewegung des Betätigungshebels (23) in eine Verschiebebewegung des Spannelements (45, 45') vorgesehen ist.

13. Bearbeitungsmaschine nach Anspruch 12,
**dadurch gekennzeichnet, dass**
die Umsetzeinrichtung eine durch den Betätigungshebel (23) drehbare Exzenterwelle (65) zur direkten oder indirekten Beaufschlagung des Spannelements (45, 45') umfasst.

14. Bearbeitungsmaschine nach zumindest einem der vorstehenden Ansprüche,
**dadurch gekennzeichnet, dass**
die Bearbeitungsmaschine als handgeführte Oberfräse (11) ausgeführt ist, die eine Maschineneinheit (15) und einen Frästisch (13) umfasst, wobei der Frästisch (13) über wenigstens eine Führungssäule (25) mit der Maschineneinheit (15) verbunden ist.

15. Bearbeitungsmaschine nach zumindest einem der vorstehenden Ansprüche,
**dadurch gekennzeichnet, dass**
das Klemmorgan (35) dazu ausgebildet ist, ein Drehmoment im Bereich von 6 bis 10Nm auf das zu befestigende Werkzeug (18) zu übertragen, und/oder dass zum Verschieben des Spannelementes (45, 45') zwischen der Spannstellung und der Lösestellung ein axialer Hub des Spannelements (45, 45') von 0,5mm bis 3mm vorgesehen ist,
und/oder dass das Spannelement (45, 45') mit einer Vorspannkraft von 2kN bis 5kN in die Spannstellung oder in die Lösestellung vorgespannt ist.

## Claims

1. A machining tool (11), in particular a router, comprising
a shaft (33) rotatingly drivable about an axis of rotation (R);
a tool mount (17, 17') which is drive-effectively coupled to the shaft (33) or formed in one piece therewith; and
a clamping device (19) for releasably fastening a tool (18) in the tool mount (17, 17'), wherein the clamping device (19) comprises:
at least one clamping member (35) which is held at the tool mount (17, 17') and which has a central leadthrough (42) for leading through a tool (18) to be introduced into the tool mount (17, 17'), with the clamping member (35) being deformable by an axial action and the width of the leadthrough (42) being variable by this deformation; and
a clamping element (45, 45') which is supported at the tool mount (17, 17') and which is displaceable in an axial direction between a clamping position and a release position, with the clamping member (35) being able to be acted on axially by a displacement of the clamping element (45, 45') in the direction of the clamping position,
**characterized in that**
the clamping member (35) has a conical ring surrounding the central leadthrough (42),
with the ring having an outer marginal region (61) and an inner marginal region (60), and with one of the marginal regions (61) of the clamping member (35) being able to be acted on axially, while the other marginal region (60) is supported, by a displacement of the clamping element (45, 45') in the direction of the clamping position in order to flatten the clamping member (35).

2. A machining tool in accordance with claim 1,
**characterized in that**
the clamping member (35) comprises at least one flat conical clamping washer (38) or a star washer.

3. A machining tool in accordance with at least one of the preceding claims,
**characterized in that**
the clamping device (19) comprises at least one clamping washer package (37) comprising a plurality of clamping washers (38) which are arranged in a stacked manner and which are flattened together when acted on by the clamping element (45, 45').

4. A machining tool in accordance with at least one of the preceding claims,
**characterized in that**
an abutment for the clamping member formed at the tool mount (17, 17') is arranged in the axial direction at spacings between two abutments of the clamping element (45, 45') that are variable in opposite senses by the displacement of the clamping element (45, 45');
and/or **in that** the clamping member (35) can be supported in a radially outwardly facing direction at the clamping element (45') or at an element which moves along axially therewith.

5. A machining tool in accordance with at least one of the preceding claims,
**characterized in that**
the clamping element (45, 45') comprises a sleeve (46, 76) which engages around the tool mount (17, 17') at least for a radial and/or axial support of the clamping member (35).

6. A machining tool in accordance with at least one of the preceding claims,
**characterized in that**
the clamping element (45, 45') is non-rotatably supported at the tool mount (17).

7. A machining tool in accordance with at least one of the preceding claims,
**characterized in that**
the clamping member (35) is inserted into a receiver (79) formed by the clamping element (45').

8. A machining tool in accordance with any one of the claims 1 to 6,
**characterized in that**
the tool mount (17) expands radially toward a free end to a receiver (29) into which the clamping member (35) is inserted.

9. A machining tool in accordance with at least one of the preceding claims,
**characterized in that**
the clamping element (45, 45') is preloaded into the clamping position or into the release position.

10. A machining tool in accordance with at least one of the preceding claims,
**characterized in that**
the clamping device (19) has a pivotable actuation lever (23) by means of which the clamping element (45, 45') can be adjusted between the clamping position and the release position.

11. A machining tool in accordance with claim 10,
**characterized in that**
the actuation lever (23) is pivotable about a pivot axis (S) extending transversely to the axis of rotation (R);
and/or **in that** the actuation lever (23) extends at least substantially in parallel with the axis of rotation (R) when the clamping element (45, 45') is set into the clamping position and/or extends perpendicular or obliquely to the axis of rotation (R) when the clamping element (45, 45') is set into the release position.

12. A machining tool in accordance with claim 10 or claim 11,
**characterized in that**
a conversion device (65) is provided for converting a pivot movement of the actuation lever (23) into a displacement movement of the clamping element (45, 45').

13. A machining tool in accordance with claim 12,
**characterized in that**
the conversion device comprises an eccentric shaft (65) rotatable by the actuation lever (23) for directly or indirectly acting on the clamping element (45, 45').

14. A machining tool in accordance with at least one of the preceding claims,
**characterized in that**
the machining tool is configured as a hand-operated router (11) which comprises a machine unit (15) and a milling table (13), with the milling table (13) being connected to the machine unit (15) via at least one guide column (25).

15. A machining tool in accordance with at least one of the preceding claims,
**characterized in that**
the clamping member (35) is configured to transmit a torque in the range from 6 to 10 Nm to the tool (18) to be fastened;
and/or **in that** an axial stroke of the clamping element (45, 45') of 0.5 mm to 3 mm is provided for displacing the clamping element (45, 45') between the clamping position and the release position;
and/or **in that** the clamping element (45, 45') is preloaded into the clamping position or into the release position by a preload force of 2 kN to 5 kN.

## Revendications

1. Machine d'usinage (11), en particulier défonceuse, comportant
un arbre (33) pouvant être entraîné en rotation autour d'un axe de rotation (R),
un logement à outil (17, 17') accouplé en entraînement à l'arbre (33) ou réalisé d'un seul tenant avec celui-ci, et
un dispositif de serrage (19) pour fixer de façon amovible un outil (18) dans le logement à outil (17, 17'), le dispositif de serrage (19) comprenant :
au moins un organe de coincement (35) qui est maintenu sur le logement à outil (17, 17') et qui présente un passage central (42) pour faire passer un outil (18) à introduire dans le logement à outil (17, 17'), l'organe de coincement (35) étant déformable lors d'une sollicitation axiale et la largeur du passage (42) étant variable par cette déformation, et
un élément de serrage (45, 45') qui est monté sur le logement à outil (17, 17') et qui peut être déplacé dans la direction axiale entre une position de serrage et une position de desserrage, l'organe de coincement (35) pouvant être sollicité axialement par un déplacement de l'élément de serrage (45, 45') en direction de la position de serrage,
**caractérisée en ce que**
l'organe de coincement (35) présente une bague conique entourant le passage central (42),
la bague présentant une zone de bord extérieure (61) et une zone de bord intérieure (60), l'une des zones de bord (61) de l'organe de coincement (35) pouvant être sollicitée axialement, l'autre zone de bord (60) étant soutenue, par déplacement de l'élément de serrage (45, 45') en direction de la position de serrage, afin d'aplatir l'organe de coincement (35).

2. Machine d'usinage selon la revendication 1,
**caractérisée en ce que**
l'organe de coincement (35) comprend au moins un disque de coincement (38) plat conique ou un disque en étoile.

3. Machine d'usinage selon l'une au moins des revendications précédentes,
**caractérisée en ce que**
le dispositif de serrage (19) comprend au moins un empilement de disques de coincement (37) constitué de plusieurs disques de coincement (38) disposés en empilement, qui sont aplatis conjointement lors d'une sollicitation par l'élément de serrage (45, 45').

4. Machine d'usinage selon l'une au moins des revendications précédentes,
**caractérisée en ce que**
une contrebutée réalisée sur le logement à outil (17, 17') et destinée à l'organe de coincement est disposée en direction axiale entre deux contrebutées de l'élément de serrage (45, 45') à des distances variables par le déplacement de l'élément de serrage (45, 45') en sens opposé, et/ou **en ce que**
dans une direction dirigée radialement vers l'extérieur, l'organe de coincement (35) peut être appuyé contre l'élément de serrage (45') ou contre un élément se déplaçant axialement avec celui-ci.

5. Machine d'usinage selon l'une au moins des revendications précédentes,
**caractérisée en ce que**
l'élément de serrage (45, 45') comprend une douille (46, 76) qui entoure le logement à outil (17, 17') au moins pour le soutien radial et/ou axial de l'organe de coincement (35).

6. Machine d'usinage selon l'une au moins des revendications précédentes,
**caractérisée en ce que**
l'élément de serrage (45, 45') est monté de façon immobile en rotation sur le logement à outil (17).

7. Machine d'usinage selon l'une au moins des revendications précédentes,
**caractérisée en ce que**
l'organe de coincement (35) est mis en place dans un logement (79) formé par l'élément de serrage (45').

8. Machine d'usinage selon l'une au moins des revendications 1 à 6,
**caractérisée en ce que**
le logement à outil (17) va en s'évasant radialement vers l'extrémité libre pour donner un logement (29) dans lequel est mis en place l'organe de coincement (35).

9. Machine d'usinage selon l'une au moins des revendications précédentes,
**caractérisée en ce que**
l'élément de serrage (45, 45') est précontraint vers la position de serrage ou vers la position de desserrage.

10. Machine d'usinage selon l'une au moins des revendications précédentes,
**caractérisée en ce que**
le dispositif de serrage (19) comprend un levier d'actionnement (23) mobile en pivotement à l'aide duquel l'élément de serrage (45, 45') est déplaçable entre la position de serrage et la position de desserrage.

11. Machine d'usinage selon la revendication 10,
**caractérisée en ce que**
le levier d'actionnement (23) est mobile en pivotement autour d'un axe de pivotement (S) transversal à l'axe de rotation (R), et/ou **en ce que** le levier d'actionnement (23) s'étend au moins sensiblement parallèlement à l'axe de rotation (R) lorsque l'élément de serrage (45, 45') est amené dans la position de serrage, et/ou il s'étend perpendiculairement ou en oblique par rapport à l'axe de rotation (R) lorsque l'élément de serrage (45, 45') est amené dans la position de desserrage.

12. Machine d'usinage selon la revendication 10 ou 11,
**caractérisée en ce que**
il est prévu un moyen convertisseur (65) pour convertir un mouvement de pivotement du levier d'actionnement (23) en un mouvement de déplacement de l'élément de serrage (45, 45').

13. Machine d'usinage selon la revendication 12,
**caractérisée en ce que**
le moyen convertisseur comprend un arbre excentrique (65) pouvant être tourné par le levier d'actionnement (23) pour la sollicitation directe ou indirecte de l'élément de serrage (45, 45').

14. Machine d'usinage selon l'une au moins des revendications précédentes,
**caractérisée en ce que**
la machine d'usinage est réalisée sous la forme d'une défonceuse (11) guidée manuellement, qui comprend un ensemble de machine (15) et une table de fraisage (13), la table de fraisage (13) étant reliée à l'ensemble de machine (15) par au moins une colonne de guidage (25).

15. Machine d'usinage selon l'une au moins des revendications précédentes,
**caractérisée en ce que**
l'organe de coincement (35) est réalisé pour transmettre à l'outil à fixer (18) un couple de rotation dans la plage de 6 à 10 Nm, et/ou **en ce que** pour déplacer l'élément de serrage (45, 45') entre la position de serrage et la position de desserrage, il est prévu une course axiale de l'élément de serrage (45, 45') allant de 0,5 mm à 3 mm, et/ou **en ce que** l'élément de serrage (45, 45') est précontraint vers la position de serrage ou vers la position de desserrage avec une force de précontrainte allant de 2 kN à 5 kN.
